# NEUE EUROPÄISCHE PATENTSCHRIFT

(11) **EP 0 765 252 B2**
(45) Veröffentlichungstag und Bekanntmachung des Hinweises auf die Entscheidung über den Einspruch: **12.06.2002**
(45) Hinweis auf die Patenterteilung: 07.01.1999
(21) Anmeldenummer: 94918337.0
(22) Anmeldetag: 18.05.1994
(51) Int. Cl.: B60N 2/24, B60N 2/44, B60R 22/18

(54) **SITZBANK FÜR KRAFTFAHRZEUGE, INSBESONDERE WOHNMOBILE**
BENCH SEAT FOR MOTOR VEHICLES, IN PARTICULAR CAMPING CARS
BANQUETTE POUR VEHICULES A MOTEUR, NOTAMMENT AUTOCARAVANES

(30) Priorität: 19.05.1993 DE 4316930
(43) Veröffentlichungstag der Anmeldung: 02.04.1997
(73) Patentinhaber: AGUTI PRODUKTENTWICKLUNG & DESIGN GMBH, 88079 Kressbronn (DE)
(72) Erfinder: GRIEGER, Andreas, D-88079 Kressbronn (DE)
(74) Vertreter: Fiener, Josef
(86) Internationale Anmeldenummer: EP9401607
(87) Internationale Veröffentlichungsnummer: WO9426553

(56) Entgegenhaltungen:
- EP-A- 0 511 100
- AU-B- 561 233
- AU-B- 562 352
- DE-A- 3 813 557
- DE-A- 3 822 461
- DE-U- 8 526 894
- DE-U- 9 314 859
- US-A- 3 885 810
- US-A- 3 961 807

## Beschreibung

Die Erfindung betrifft eine Sitzbank für Kraftfahrzeuge, insbesondere Wohnmobile, bestehend aus einem Sitzbankgestell mit Sitzfläche und Sitzlehne für wenigstens zwei Personen, wobei das Sitzbankgestell am Fahrzeugboden/-rahmen angeordnet ist und eine Halterungsvorrichtung für die beiden Sicherheitsgurte aufweist, wie in der US-A-3,885,810 gezeigt.

Bei derartigen Sitzbänken für Kraftfahrzeuge, insbesondere im Wohnmobilbereich, werden häufig noch Beckengurte als Sicherheitsgurte verwendet (Zweipunktgurte), obwohl sich im PKW-Bereich längst der Dreipunktgurt als optimale Rückhaltevorrichtung durchgesetzt hat. Ein Grund liegt darin, daß die Sitzbankgestelle für eine Anlenkung von Dreipunktgurten, insbesondere mit dem oberen Anlenkpunkt (Gurtumlenkpunkt) keine ausreichende Festigkeit aufweisen. Eine Anlenkung der Sicherheitsgurte, wie im PKW-Bereich üblich, an der B- oder C-Säule der Kraftfahrzeugkarosserie, kommt aus zweierlei Gründen nicht in Betracht. Häufig ist nämlich die Sitzbank von einer Karosserie-Seitenwand abgerückt angeordnet, um für den Wohnbereich des Wohnmobiles genügend Durchgangsmöglichkeiten zu schaffen. Somit müßte der obere Anlenkpunkt für die zentrale Sitzposition über eine weite Strecke von etwa 1 m bis zu dem nächstliegenden Fahrzeugholm geführt werden. Der zweite Grund liegt darin, daß bei Wohnmobilen häufig nur Kunststoffaufbauten ohne besonders starre Karosseriestruktur auf den Fahrzeugrahmen aufgebaut werden, so daß bei einer Anlenkung an diese Aufbauten die erforderliche Unfallsicherheit, insbesondere die Ausreißfestigkeit des oberen Um-/Anlenkpunktes nicht gegeben ist. Auch die von verschiedenen Vans bekannte Lösung, wonach der obere Anlenkpunkt der Sicherheitsgurte im Deckenbereich (Dachhimmel) angeordnet ist, ist für Wohnmobile selbst nicht praktikabel, da eine ausreichende Stehhöhe und somit ein großer Abstand zwischen Sitzbank und Fahrzeugdach gefordert wird.

Aus der DE 93 02 831 U1 ist eine Sitzbank mit einer Vertikalstütze bekannt, die am Bodenteil des Fahrzeugchassis befestigt ist. Diese Vertikalstütze ist jedoch seitlich von der Sitzlehne und durch eine horizontal verlaufende Quertraverse zusätzlich abgestützt. Zudem ist hierbei an dem Sitzbankgestell nur ein Sicherheitsgurt vollständig angeordnet, während der obere Anlenkpunkt des zweiten Sicherheitsgurtes an einer Seitenwand des Fahrzeuges angeordnet ist. Dadurch ist eine stabile Außen-Karosserie erforderlich, was jedoch bei Wohnmobilen mit Kunststoff-Karosserie im allgemeinen nicht der Fall ist. Zudem ist hierdurch die Anordnung der Sitzbank konstruktiv festgelegt und kann nicht von dem oberen Gurt-Anlenkpunkt für den äußeren Sitzplatz wegverschoben werden, wie dies gerade für die Wohnmobilproduktion mit variabler und oft unterschiedlicher Sitzbankanordnung wünschenswert wäre.

Die DE 79 23 386 beschreibt einen Einzelsitz, wobei dreieckförmig angeordnete Verstärkungsstreben an dem Sitzunterteil angelenkt sind.

Aus der DE 21 13 579 ist eine Halterungsvorrichtung für Sicherheitseinrichtungen bekannt, wobei Stützstreben direkt am Fahrzeugboden befestigt sind. Hierbei ist jedoch eine zusätzliche Querstrebe zur Verankerung an den seitlichen Rahmenholmen vorhanden.

Aus der US 2,740,642 und der DE 27 47 398 sind Rückhaltesysteme mit aufrechten Rohren hinter den beiden Vordersitzen bekannt, wobei die Rohre zur zusätzlichen Befestigung zwischen Fahrzeugboden und Fahrzeugdach festgeklemmt oder mittels eines Drahtseiles befestigt werden. Dies macht einen stabilen Dachaufbau erforderlich, der bei Wohnmobilen im allgemeinen nicht vorhanden ist.

Die DE 91 14 531 befaßt sich mit einem Verankerungsgestell für Sitzbänke, das durch entsprechende Verstrebungen ausgesteift ist. Hierbei sind jedoch die üblichen Zweipunkt-(Becken-)Gurte vorgesehen.

Die DE 40 03 941 bezieht sich auf eine Sicherheitsgurtanordnung für die Rücksitze, wobei der obere Anlenkpunkt des Dreipunktgurtes hinter der Rücksitzanlage an einem feststehenden Bauteil befestigt ist.

Die US 3,451,719 zeigt lediglich eine hinter einer Sitzbank quer verlaufende Stange zum Straffen von Beckengurten.

Die US 2,833,554 beschreibt ein Aufprall-Sicherheitssystem, wobei vor der Brust und den Knien des Fahrers eine Prallplatte vorgesehen ist, die an einer zentralen, am Karosseriedach und Boden befestigten Stange gelagert ist.

Die US 2,891,804 befaßt sich mit einer Abstützvorrichtung für einen schräg verlaufenden Zweipunktgurt, wobei eine Säule am Dach des Fahrzeugs befestigt ist und zudem noch eine zusätzliche Strebe im Dach eingezogen ist.

Die GB 2 102 743 befaßt sich mit einer Halterung für Rollstuhlfahrer in Bussen, wobei die Säulenstangen wiederum zwischen Boden und Dach des Bodens verspannt werden.

Demzufolge liegt der Erfindung die Aufgabe zugrunde, eine Sitzbank für Kraftfahrzeuge, insbesondere Wohnmobile zu schaffen, die die Voraussetzungen zur Anwendung von Dreipunktgurten und damit eine erhöhte Unfallsicherheit ermöglicht, sowie eine einfache, weitgehend frei wählbare Befestigungsmöglichkeit im Fahrzeug bietet.

Diese Aufgabe wird gelöst durch eine Sitzbank mit den Merkmalen des Patentanspruches 1.

Durch die Anordnung einer aufrechten Säule an der Sitzlehne kann der obere Sicherheitsgurt-Anlenkpunkt für beide Sicherheitsgurte der beiden Sitzplätze an dieser sehr stabil ausgebildeten Säule angeordnet werden. Die nötige Festigkeit, insbesondere Biege-, Torsionsund Knickfestigkeit der Säule wird hierbei durch die direkte Verbindung am Fahrzeugboden/Fahrzeugrahmen mittels eines Anschlußflansches geschaffen, so daß die Krafteinleitung im Falle eines Unfalles unmittelbar in den Fahrzeugrahmen erfolgt. Bevorzugt ist hierbei der Anschlußflansch der Säule unmittelbar über einen Fahrzeug-Längsträger angeordnet. Durch diese freistehende Ausführung benötigt die Säule keinen zweiten Befestigungspunkt am Karosseriedach oder Seitenholmen, so daß die Sitzbank auf der Bodengruppe des Fahrzeuges nahezu an beliebigen Orten, insbesondere auch von den Seitenwänden abgerückt angeordnet werden kann.

Dabei ist für eine Sitzbank nur eine einzige zentrale Säule vorgesehen, von der dann die beiden oberen Um-/Anlenkpunkte für die beiden Sicherheitsgurte zu außenliegenden Gurtschlössern führen. In vorteilhafter Ausführung können dabei zugleich auch die Kopfstützen an dieser Säule angeordnet sein.

Weiterhin ist vorgesehen, daß das Sitzbankgestell, auf dem die Sitzfläche angeordnet ist, ebenfalls an der Säule befestigt ist, insbesondere angeschraubt ist. Hierdurch ergibt sich eine weitere Versteifung der Sitzbank-Struktur. Dabei wird das Sitzbankgestell dadurch gebildet, daß vom unteren Bereich der Säule aus strahlen- bzw. korbartig verlaufende Diagonalstreben angeordnet sind, die somit die Sitzfläche für die Sitzbank unterstützen und Halterungen für die Gurtschlösser bilden. Hierdurch kann erreicht werden, daß nach Lösen des Anschlußflansches für die Säule die gesamte Sitzbankgruppe leicht aus dem Fahrzeug ausgebaut werden kann. Der Anschlußflansch ist bevorzugt als unmittelbar über dem Fahrzeuglängsträger liegende Flanschplatte ausgebildet, die mittels Schraubverbindungen oder sonstigen Schnellverschlüssen rasch lösbar ist, also daß verschiedene Einbauorte für die Säule und die zugehörige Sitzbankgruppe innerhalb der Fahrzeuge gewählt werden können. Dies ist insbesondere vorteilhaft bei der Produktion, da für verschiedene Modelle die gleiche Sitzbank an verschiedenen Einbauvarianten verwendet werden kann.

Weitere vorteilhafte Ausgestaltungen der Erfindung sind Gegenstand der Unteransprüche.

Nachfolgend werden mehrere Ausführungsbeispiele anhand der Zeichnungen näher erläutert und beschrieben.

Es zeigen:
- Fig. 1: eine schematische Seitenansicht des Grundaufbaus einer Sitzbank für Kraftfahrzeuge, insbesondere Wohnmobile;
- Fig. 2: eine Vorderansicht der Sitzbank gemäß Fig. 1;
- Fig. 3: eine abgewandelte Ausführungsform mit einer rohrförmigen Ausbildung der SitzbankSäule;
- Fig. 4: eine weitere Ausführungsform der Sitzbank mit schematischer Darstellung der Einbausituation in einem Wohnmobil;
- Fig. 5: eine besonders einfache Ausführungsform der Sitzbank, insbesondere des Sitzbankgestells gemäß Patentanspruch 1.

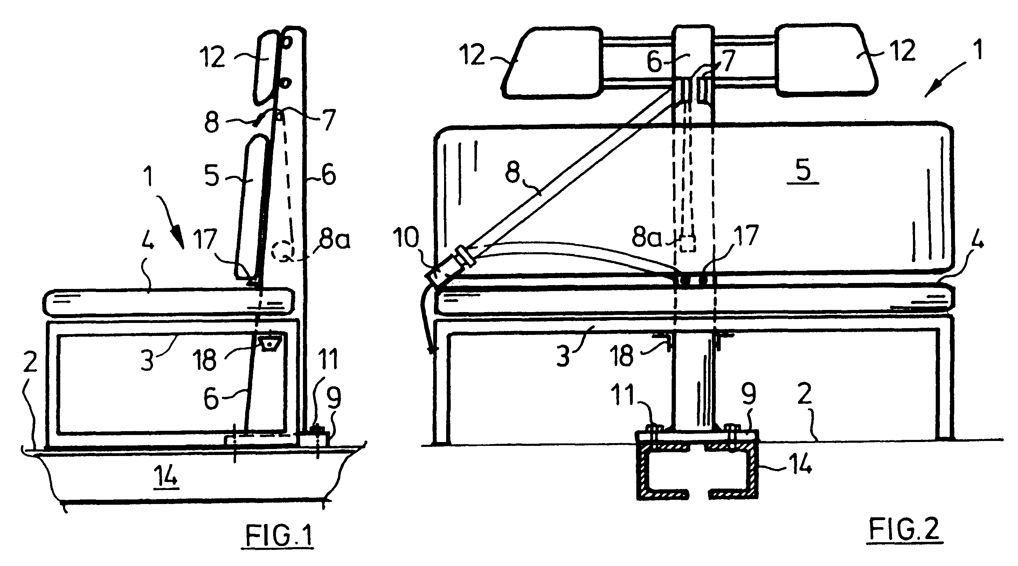

In Fig. 1 ist eine Seitenansicht auf eine Sitzbank 1 dargestellt, die auf einem Fahrzeugboden 2 stehend befestigt ist. Die Sitzbank 1 besteht im wesentlichen aus einem Sitzbankgestell 3, einer Sitzfläche 4 für zwei Personen und einer sich daran rechtwinklig anschließenden, in etwa flächengleichen Sitzlehne 5. Von wesentlicher Bedeutung ist die Anordnung einer aufrechten Säule 6 an der Rückseite der Sitzlehne 5, wobei an dem oberen Endbereich der Säule 6 je ein oberer Sicherheitsgurt-Anlenkpunkt 7 vorgesehen ist (vgl. auch Fig. 2). Unter "Anlenkpunkt" 7 soll hierbei auch ein Umlenkpunkt z. B. als Sicherheitsgurt-Umlenkbügel verstanden werden.

Von wesentlicher Bedeutung ist weiterhin ein am unteren Ende der Säule 6 vorgesehener Anschlußflansch 9 zur Verbindung der Säule 6 mit dem Fahrzeugboden bzw. Fahrzeugrahmen 2. Dieser Anschlußflansch 9 ist bevorzugt als relativ großflächige Flanschplatte ausgebildet, die mit der Säule 6 fest verbunden, insbesondere verschweißt ist und mit dem Fahrzeugboden 2, insbesondere mit einem darunter verlaufenden Rahmenträger (im allgemeinen Längsträger 14) mittels Schraubverbindungen 11 lösbar befestigt ist. Die Säule 6 ist bevorzugt als Hohlprofil-Kastenträger ausgebildet und weist einen sich nach oben hin verjüngenden Querschnitt auf. Durch letztere Maßnahme wird zum einen eine Anpassung an die Neigung der Sitzlehne 5 erreicht, sowie eine besonders hohe Formsteifigkeit bei Belastungen, wie sie bei einem Unfall auf den Sicherheitsgurt 8 bzw. den oberen Anlenkpunkt 7 auftreten. Zum anderen wird durch das Hohlprofil der Säule 6 erreicht, daß die Gurtrolle 8a - wie angedeutet -in einfacher Weise in die Säule 6 eingesetzt werden kann. An dem oberen Anlenkpunkt 7 kann dabei auch eine Gurthöhenverstellung vorgesehen sein, wie dies aus dem PKW-Bereich bekannt ist.

Der Sicherheitsgurt 8 kann beim Anschnallen von dem oberen Anlenkpunkt 7 an der Säule 6 herabgezogen werden und an das hier außen liegende Gurtschloß 10 eingesteckt werden. Vom Gurtschloß 10 führt dann der Beckenteil des Sicherheitsgurtes 8 zum unteren Anlenkpunkt 17, der ebenfalls in bevorzugter Ausführung direkt an der Säule 6 im Bereich zwischen der Sitzfläche 4 und der Sitzlehne 5 angeordnet ist. Da der untere Anlenkpunkt 17 des Sicherheitsgurtes 8 im allgemeinen jedoch geringfügigeren Beanspruchungen als der obere Anlenkpunkt 7 ausgesetzt ist, könnte dieser untere Anlenkpunkt 17 des Sicherheitsgurtes 8 auch an dem rahmenartigen Sitzbankgestell 3 angeordnet sein.

Von besonderer Bedeutung ist auch, daß die Kopfstützen 12 in besonders stabiler Weise an der Säule 6, wie hier über horizontal verlaufende, nicht näher bezeichnete Streben befestigt werden können. Somit sind in der Sitzlehne 5 selbst keine Halterungen oder Verstrebungen für die Kopfstützen 12 mehr nötig.

Es sei auch darauf hingewiesen, daß das Sitzbankgestell 3, auf dem die Sitzfläche 4 angeordnet ist, ebenfalls mit der Säule 6 verbunden, insbesondere verschraubt, wie dies durch die hier lediglich schematisch eingezeichneten Winkellaschen 18 an der Unterseite des Sitzbankgestelles 3 angedeutet ist.

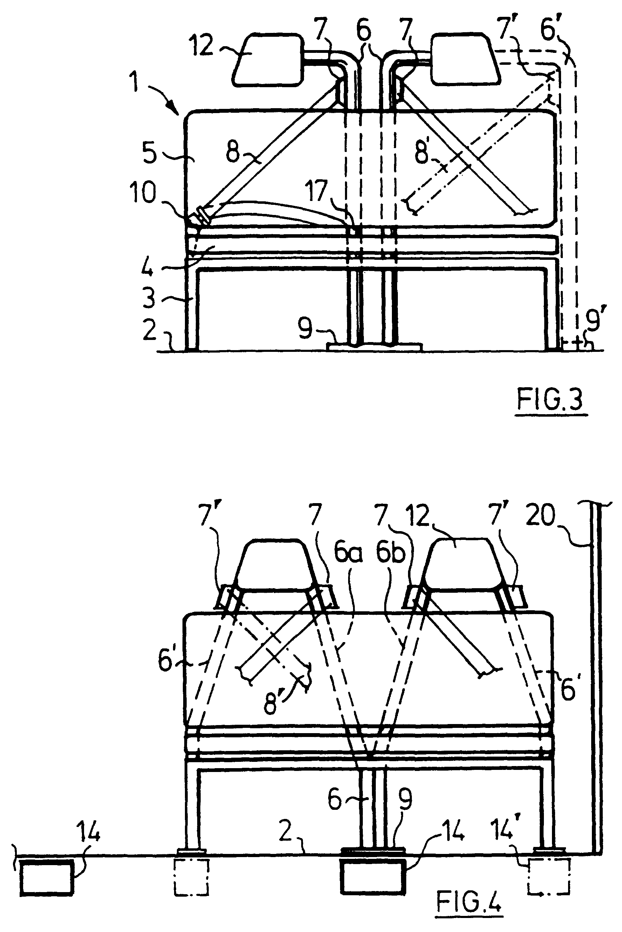

In Fig. 3 ist eine abgewandelte Ausführungsform dargestellt, wobei die Säule 6 anstatt durch einen holmartigen Profilträger durch zwei voneinander getrennte Rohre 6 gebildet ist. Die übrigen Bauteile entsprechen denen der Figuren 1 und 2, so daß hierzu dieselben Bezugszeichen verwendet werden. Der Verlauf des Dreipunkt-Sicherheitsgurtes 8 ist hierbei, wie angedeutet, der gleiche wie in Fig. 2, nämlich mit einem bezüglich der Sitzbank 1 mittigen oberen Anlenkpunkt 7, einem seitlich außen liegenden Gurtschloß 10 und einem wiederum mittig, bevorzugt an der Säule 6 angeordneten unteren Anlenkpunkt 17. Bei dieser Ausführung kann durch entsprechendes Biegen des Rohres für die Säule 6 im oberen Bereich zugleich eine besonders stabile Halterung für die Kopfstützen 12 geschaffen werden. Der horizontale Bereich des Rohres 6 in Nähe der Kopfstützen 12 kann jedoch zur Festigkeitserhöhung auch noch weiter geführt werden zu einem strichliert dargestellten Rohr 6', das dann eine etwa hufeisenförmige oder bügelförmige Ausführung der Säule 6 ergibt. Es sei darauf hingewiesen, daß die hier strichliert eingezeichnete Säule 6', ähnlich wie in der mittigen Anordnung der Säule 6, ebenfalls mit einem Anschlußflansch 9' mit dem Fahrzeugboden 2 bzw. den Rahmenträgern verbunden sein kann, so daß hierdurch der umgekehrte Sicherheitsgurtverlauf, wie mit dem Bezugszeichen 8' bezeichnet, ausgehend von einem oberen, seitlich außen liegenden Anlenkpunkt 7' vorliegt.

In Fig. 4 ist eine abgewandelte Ausführungsform für die bügelartige Gestaltung der Säule 6 dargestellt. Hierbei verzweigt sich die mit dem mittigen Anschlußflansch 9 an dem Fahrzeugrahmen 2 verschraubte Säule 6 in zwei Teilabschnitte 6a, 6b, die dann an ihrem oberen Ende wiederum die Kopfstützen 12 und die oberen Anlenkpunkte 7 für die nach außen hin verlaufenden Sicherheitsgurte 8 tragen. Hierdurch ergibt sich ebenfalls ein Gurtverlauf gemäß Fig. 2. Die Säulenabschnitte 6a und 6b können jedoch durch die Kopfstützen 12 hindurch in die dann wiederum abwärts geneigten Säulenbereiche 6' weitergeführt werden. Diese können dann in das Sitzbankgestell 3 einmünden, oder, sofern hier entsprechende Fahrzeugrahmen oder ein entsprechend stabiler Fahrzeugboden vorhanden ist, auch bis dorthin nach unten weitergeführt werden und wiederum mit einem Anschlußflansch 9' - ähnlich wie in Fig. 3 - verschraubt werden.

Zur besseren Darstellung ist hierbei ein Rahmenaufbau 20 eines Wohnmobiles angedeutet. Hieraus ist ersichtlich, daß die Sitzbank und die Säule 6 keinerlei Verbindungen zu der Seitenwand 20 (oder dem Karosseriedach) benötigt, also im oberen Bereich freistehend angeordnet ist, wodurch sich eine nahezu beliebige Plazierung in Breiten- und Längsrichtung des Fahrzeuges ergibt. Hierdurch kann die Sitzbank beispielsweise unmittelbar neben Seitenfenstern aufgestellt werden. Wie ersichtlich, ist bei der Ausführung mit zwei Längsträgern 14 die mittige Säule 6 über den Anschlußflansch 9 unmittelbar mit dem hier rechten Längsträger 14 verbunden. Es sind jedoch auch Karosserie-Aufbauten bekannt, bei denen der Fahrzeugrahmen durch mehrere nebeneinander mit Abstand verlaufende Längsträger 14' (strichpunktiert dargestellt) gebildet ist. In letzterem Falle kann es festigkeitsmäßig günstiger sein, Anschlußflansche 9 zusätzlich an den beiden äußeren Säulen 6' anzuordnen, da hierdurch eine bessere Krafteinleitung bei Unfallsituationen möglich ist.

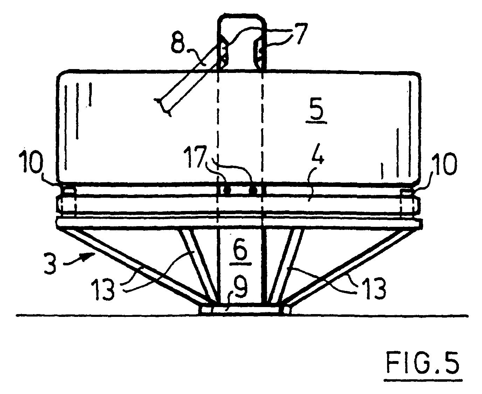

In Fig. 5 ist ein vereinfachter Aufbau des Sitzbankgestelles 3 dargestellt. Hierbei verlaufen vom unteren Ende der Säule 6 aus korbförmig oder strahlenförmig mehrere Diagonalstreben 13 zur Sitzfläche 4, so daß hierdurch keine zusätzlichen Abstützfüße für das Sitzbankgestell 3 erforderlich sind. Hierdurch ist auch der unter der Sitzbank 1 befindliche Bereich für Reinigungszwecke besonders gut zugänglich.

## Patentansprüche

1. Sitzbank für Kraftfahrzeuge. insbesondere Wohnmobile. bestehend aus einem rahmenartigen Sitzbankgestell (3) mit vom Fahrzeugboden (2) beabstandeter Sitzflache (4) und Sitzlehne (5) für wenigstens zwei Personen, wobei das Sitzbankgestell (3) am Fahrzeugboden/-rahmen (2) angeordnet ist und die Halterungsvorrichtung für die beiden Dreipunkt-Sicherheitsgurte aufweist, wobei an der Sitzlehne (5) wenigstens eine aufrechte Säule (6) vorgesehen ist, die an ihrem oberen Endbereich je einen oberen Sicherheitsgurt-Anlenkpunkt (7) aufweist und an ihrem unteren Ende einen Anschlußflansch (9) zur Verbindung mit dem Fahrzeugboden/-rahmen (2) aufweist, wobei die Säule (6) tragender Bestandteil des Sitzbankgestelles (3) ist, und das Sitzbankgestell (3) an der Säule (6) befestigt, insbesondere angeschraubt ist, sowie das Sitzbankgestell (3) durch strahlenförmig verlaufende Diagonalstreben (13) gebildet ist, die vom unteren Bereich der zentral angeordneten Säule (6) ausgehen.

2. Sitzbank nach Anspruch 1,
**dadurch gekennzeichnet, daß**
der Anschlußflansch (9) als Flanschplatte ausgebildet ist, die mit der Säule (6) verbunden, insbesondere verschweißt und mit dem Fahrzeugboden/rahmen (2) mittels Schraubverbindungen (11) lösbar befestigt ist

3. Sitzbank nach Anspruch 1 oder 2,
**dadurch gekennzeichnet. daß**
die Säule (6) über die Oberkante der Sitzlehne (5) hinausragt.

4. Sitzbank nach Anspruch 3,
**dadurch gekennzeichnet, daß**
an der Säule (6) wenigstens eine Kopfstütze (12) befestigt ist.

5. Sitzbank nach einem der Ansprüche 1 bis 4,
**dadurch gekennzeichnet, daß**
die Säule (6) einen nach oben hin verjüngenden Querschnitt aufweist.

6. Sitzbank nach Anspruch 5,
**dadurch gekennzeichnet, daß**
die Säule (6) als Hohlprofil-Kastenträger ausgebildet ist.

7. Sitzbank nach einem der Ansprüche 1 bis 6,
**dadurch gekennzeichnet, daß**
der Anschlußflansch (9) der Säule (6) unmittelbar über einem Fahrzeug-Längsträger (14) angeordnet ist.

## Claims

1. A bench seat for motor vehicles, in particular camping cars, consisting of a frame-like bench seat frame (3) with seat (4) and back rest (5) being spaced apart from the vehicle floor (2) for at least two persons, with the bench seat frame (3) being arranged at the vehicle floor/chassis (2) and comprising the holding device for both three-point safety belts, wherein at said back rest (5) at least one upright column (6) is provided, comprising one top safety belt coupling point (7) each at its top end area and comprising a coupling flange (9) at its lower end for connection with the vehicle floor/chassis (2), wherein said column (6) is a supporting component part of said bench seat frame (3) and said bench seat frame (3) is detachably mounted at said column (6), in particular bolted, and wherein said bench seat frame (3) is formed by radially extending diagonal struts (13) emanating from the lower portion of the centrally arranged column (6).

2. A bench seat according to claim 1, **characterized in that** said coupling flange (9) is formed as a flange plate being connected with said column (6), in particular welded, and being detachably mounted on said vehicle floor/chassis (2) by means of bolted connections (11).

3. A bench seat according to claim 1 or 2, **characterized in that** said column (6) projects beyond the top edge of said back rest (5).

4. A bench seat according to claim 3, **characterized in that** at least one head rest (12) is mounted at said column (6).

5. A bench seat according to any of the claims 1 to 4, **characterized in that** said column (6) comprises an upwardly tapering cross-section.

6. A bench seat according to claim 5, **characterized in that** said column (6) is formed as a hollow section box girder.

7. A bench seat according to any of the claims 1 to 6, **characterized in that** said coupling flange (9) of said column (6) is directly arranged above a longitudinal beam (14) of the vehicle.

## Revendications

1. Banquette pour véhicules à moteur, notamment autocaravanes, composée d'une carcasse de banquette (3) semblable à un cadre comprenant une assise (4) éloignée du plancher du véhicule (2) et un dossier (5) pour au moins deux personnes, sachant que la carcasse de la banquette (3) est placée sur le plancher / chassis du véhicule (2) et présente le dispositif de fixation pour les deux ceintures de sécurité à trois points, sachant qu'au niveau du dossier (5) est prévue au moins une colonne verticale (6) qui présente dans sa zone d'extrémité supérieure un point d'articulation supérieur (7) de la ceinture de sécurité et à son extrémité inférieure, une bride de jonction (9) destinée à la relier au plancher /chassis du véhicule (2), sachant que la colonne (6) est un élément porteur de la carcasse de la banquette (3) et la carcasse de la banquette (3) est fixée de façon amovible, notamment vissée, sur la colonne (6), ainsi que la carcasse de la banquette (3) est formée par des entretoises diagonales (13) s'étendant en forme de rayons, qui partent de la zone inférieure de la colonne (6) placée au centre.

2. Banquette selon la revendication 1, **caractérisée en ce que** la bride de jonction (9) est réalisée sous forme de plaque qui est reliée, notamment soudée, à la colonne (6) et qui est fixée de façon amovible au plancher / chassis du véhicule (2) au moyen d'assemblages par vis (11).

3. Banquette selon la revendication 1 ou 2, **caractérisée en ce que** la colonne (6) fait saillie de l'aréte supérieure du dossier (5).

4. Banquette selon la revendication 3, **caractérisée en ce qu'**au moins un appui-tête (12) est fixé sur la colonne (6).

5. Banquette selon l'une des revendications 1 à 4, **caractérisée en ce que** la colonne (6) présente une section se rétrécissant vers le haut.

6. Banquette selon la revendication 5, **caractérisée en ce que** la colonne (6) est réalisée en tant que poutre en caisson composée de profilés creux.

7. Banquette selon l'une des revendications 1 à 6, **caractérisée en ce que** la bride de jonction (9) de la colonne (6) est placée directement au-dessus d'un longeron (14) du véhicule.
